(19) Europäisches Patentamt
European Patent Office
Office européen des brevets

(11) EP 2 604 333 A1

(12) EUROPEAN PATENT APPLICATION
published in accordance with Art. 153(4) EPC

(43) Date of publication:
**19.06.2013 Bulletin 2013/25**

(21) Application number: **11816346.8**

(22) Date of filing: **03.08.2011**

(51) Int Cl.:
***B01D 71/56*** *(2006.01)* ***B01D 69/10*** *(2006.01)*
***B01D 69/12*** *(2006.01)*

(86) International application number:
**PCT/JP2011/067772**

(87) International publication number:
**WO 2012/020680 (16.02.2012 Gazette 2012/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.08.2010 JP 2010179967**

(71) Applicant: **Toray Industries, Inc.**
**Tokyo 103-8666 (JP)**

(72) Inventors:
- **OGAWA, Takafumi**
  **Shiga 520-8558 (JP)**
- **KIMURA, Masahiro**
  **Shiga 520-8558 (JP)**
- **SASAKI, Takao**
  **Shiga 520-8558 (JP)**

(74) Representative: **Hoefer & Partner**
**Pilgersheimer Straße 20**
**81543 München (DE)**

# (54) SEPARATION MEMBRANE ELEMENT AND METHOD FOR PRODUCING COMPOSITE SEMIPERMEABLE MEMBRANE

(57) The present invention has an object to provide a separation membrane element which has a low content of extractable components and has high boron-removing performance and high water permeability, and relates to a separation membrane element including a composite semipermeable membrane which includes a microporous support and a polyamide separation function layer disposed thereon, the microporous support including a substrate and a porous supporting layer, in which the polyamide separation function layer has a yellowness of 10 to 40, and a concentration of substances extracted from the substrate is $1.0 \times 10^{-3}$% by weight or less.

EP 2 604 333 A1

## Description

### TECHNICAL FIELD

The present invention relates to a separation membrane element which is useful for the selective separation of a liquid mixture. The separation membrane element obtained in accordance with the invention is suitable, for example, for the desalting of seawater or brine water.

### BACKGROUND ART

There are various techniques for removing a substance (e.g., a salt) dissolved in a solvent (e.g., water). In recent years, utilization of membrane separation methods as processes for energy saving and resource saving are spreading. The membranes for use in the membrane separation methods include a microfiltration membrane, ultrafiltration membrane, nanofiltration membrane, reverse osmosis membrane, etc. Membrane separation elements which utilize these membranes are being used, for example, in the case of obtaining potable water from seawater, brine water, water containing harmful substances, etc., or for producing industrial ultrapure water, treating wastewater, recovering valuable substances, etc.

Most of the reverse osmosis membranes and nanofiltration membranes which are presently on the market are composite semipermeable membranes. There are two kinds of composite semipermeable membranes: composite semipermeable membranes which have a gel layer and an active crosslinked-polymer layer that have been disposed on a microporous support; and composite semipermeable membranes which have an active layer formed by condensation-polymerizing monomers on a microporous support. Of these, composite semipermeable membranes obtained by coating a microporous support with a separation function layer constituted of a crosslinked polyamide obtained by the polycondensation reaction of a polyfunctional amine with a polyfunctional acid halide are in extensive use as separation membranes having high permeability and high separation selectivity.

Incidentally, boron, which is toxic to the human body, animals and plants and which causes nerve disorders and growth inhibition, is contained in seawater in a large amount. Boron removal is therefore important for the desalting of seawater. Various techniques for improving the boron-removing performance of a composite semipermeable membrane have hence been proposed (patent documents 1 and 2). Patent document 1 discloses a method in which a composite semipermeable membrane formed by interfacial polymerization is heat-treated to improve the performance thereof.

Patent document 2 discloses a method in which a composite semipermeable membrane formed by interfacial polymerization is brought into contact with a bromine-containing aqueous solution of free chlorine. However, the membranes described in the Examples given in these documents are thought to have a membrane permeation flux of 0.5 $m^3/m^2$/day or less and a boron removal ratio of about 91 to 92% at the most when these performance values are calculated through conversion on the assumption that seawater having a temperature of 25°C, pH of 6.5, boron concentration of 5 ppm, and TDS concentration of 3.5% by weight is passed through each membrane at an operation pressure of 5.5 MPa. There has hence been a desire for the development of a composite semipermeable membrane which has higher boron-rejecting performance.

Meanwhile, in water production plants in which reverse osmosis membranes are used, there is a need for higher water permeability from the standpoint of further reducing the running cost. A method for satisfying such a need is known in which a composite semipermeable membrane which includes a crosslinked polyamide polymer formed as a separation function layer is treated by bringing the membrane into contact with an aqueous solution which contains nitrous acid (patent document 3). By this treatment, the water permeability can be improved while maintaining the boron removal ratio of the untreated membrane. However, there is a desire for an even higher boron removal ratio and even higher water permeability.

Furthermore, there has been a problem that when a conventional semipermeable membrane is used for actually obtaining a concentrated or purified desired substance as permeated liquid or non-permeated liquid, low-molecular components are dissolved away or released from the membrane or from a component member of the membrane module to lower the purity of the desired substance or to result in an initial permeate which must be discarded, leading to an increase in cost. In order to overcome this problem, a method has been disclosed in which the microporous support is reduced in water content to thereby minimize infiltration of the amine used as a polymerizable monomer and to reduce the amount of the residual amine (patent document 4). However, the membrane thus produced does not have sufficient performance. There is a need for further advancement in performance.

BACKGROUND ART DOCUMENT

PATENT DOCUMENT

Patent Document 1: JP-A-11-19493
Patent Document 2: JP-A-2001-259388
Patent Document 3: JP-A-2007-90192
Patent Document 4: JP-A-2006-122886

SUMMARY OF THE INVENTION

PROBLEMS THAT THE INVENTION IS TO SOLVE

An object of the invention is to provide a separation membrane element which has a low content of extractable components and has high boron-removing performance and high water permeability.

MEANS FOR SOLVING THE PROBLEMS

The invention, which is for accomplishing the object, has any of the following configurations.

(1) A separation membrane element including a composite semipermeable membrane which includes a microporous support and a polyamide separation function layer disposed thereon, the microporous support including a substrate and a porous supporting layer,
in which the polyamide separation function layer has a yellowness of 10 to 40, and a concentration of substances extracted from the substrate is $1.0\times10^{-3}$% by weight or less.
(2) The separation membrane element according to (1), in which, in the polyamide separation function layer, when a functional-group ratio for each of a surface of the polyamide separation function layer which is on a side facing the porous supporting layer and a surface of the polyamide separation function layer which is on a side opposite to the porous supporting layer is expressed by [(molar equivalent of azo groups)+(molar equivalent of phenolic hydroxyl groups)+(molar equivalent of amino groups)]/(molar equivalent of amide groups), a value of (the functional-group ratio for the surface on the side opposite to the porous supporting layer)/(the functional-group ratio for the surface on the side facing the porous supporting layer) is 1.1 or larger.
(3) The separation membrane element according to (1) or (2), in which the substrate is a long-fiber nonwoven polyester fabric.
(4) A method for producing a composite semipermeable membrane, the method including: bringing an aqueous solution of a polyfunctional amine into contact with a solution containing a polyfunctional acid halide on a microporous support including a substrate and a porous supporting layer to form a polyamide separation function layer having primary amino groups; and then bringing both a reagent (A) which reacts with the primary amino groups to yield a diazonium salt or a derivative thereof and a reagent (B) which reacts with the diazonium salt or the derivative thereof into contact with the polyamide separation function layer,
in which the reagent (A) is brought into contact with a surface of the polyamide separation function layer at a pressure of 0.2 MPa or higher, and a product (ppm·min) of a concentration of the reagent (B) and a period of contact between the reagent (B) and the polyamide separation function layer is regulated to 200,000 ppm·min or less.
(5) A method for producing a composite semipermeable membrane, the method including: bringing an aqueous solution of a polyfunctional amine into contact with a solution containing a polyfunctional acid halide on a microporous support including a substrate and a porous supporting layer to form a polyamide separation function layer having primary amino groups; and then bringing a reagent (C) having a primary amino group, on the polyamide separation function layer, into contact with a reagent (D) which reacts with the primary amino group to yield a diazonium salt or a derivative thereof,
in which the reagent (D) is brought into contact with a surface of the polyamide separation function layer at a pressure of 0.2 MPa or higher, and a product (ppm·min) of a concentration of the reagent (C) and a period over which the reagent (C) is in contact with the polyamide separation function layer is regulated to 200,000 ppm·min or less.

Incidentally, the reagents (A) to (D) in the invention each may be any of a simple substance, a compound, a mixture of simple substances and/or compounds, or the like.

ADVANTAGE OF THE INVENTION

According to the invention, a separation membrane element which has a low content of extractable components and which is excellent in terms of boron removal performance and water permeability can be obtained. Use of this separation membrane element is expected to bring about improvements which are energy saving and an increase in the quality of permeate.

MODE FOR CARRYING OUT THE INVENTION

In the invention, the separation membrane element is an element in which a raw fluid is fed to one surface of the separation membrane and a permeated fluid is obtained through the other surface. The separation membrane element may have been configured by binding a large number of sheets of a separation membrane of various shapes to obtain a large membrane area so that a large amount of the permeated fluid can be obtained per unit element. Examples thereof include various elements such as the spiral type, hollow-fiber type, plate-and-frame type, rotating flat membrane type, and flat-membrane integration type which are suitable for applications or purposes. Among these, the spiral separation membrane elements are frequently used from the standpoint of the ability thereof to yield a permeated fluid in a large amount while applying a pressure to the raw fluid.

A spiral separation membrane element is configured of a central tube and, wound on the periphery thereof, members including a feed-side passage material for feeding a raw fluid to a separation membrane surface, a separation membrane for separating a plurality of components contained in the raw fluid, and a permeate-side passage material with which a specific component that has passed through the separation membrane and has been separated from the raw fluid is introduced as a permeated fluid into the central tube. As the feed-side passage material, a net or the like made of a polymer is mainly used. The separation membrane preferably is a composite semipermeable membrane including a separation function layer constituted of a crosslinked polyamide polymer, a porous supporting layer constituted of a polymer, e.g., a polysulfone, and a substrate constituted of a polymer, e.g., poly(ethylene terephthalate), which have been superposed in this order from the feed side to the permeate side. As the permeate-side passage material, use is made, for example, of a woven-fabric member that is called tricot, which has a more finely rugged surface than the feed-side passage material and which can form permeate-side passages while preventing the membrane from falling. According to need, a film for heightening pressure resistance may be superposed on the tricot.

In the separation membrane, the microporous support including a substrate and a porous supporting layer has substantially no ability to separate ions or the like and is intended to impart strength to the separation function layer, which substantially has separating performance. The microporous support is not particularly limited in pore size and distribution. However, preferred is, for example, a microporous support which has even and fine pores or has micropores whose diameter gradually increases from the surface on the side where the separation function layer is formed to the surface on the other side, and in which the micropores present in the surface on the side where the separation function layer is formed have a size of 0.1 to 100 nm.

The materials to be used as the microporous support and the shapes thereof are not particularly limited. Examples of the substrate include fabrics containing as a main component at least one member selected from polyesters or aromatic polyamides. Especially preferred of these is a polyester fabric which is highly stable mechanically and thermally. Preferred forms of such fabrics are a long-fiber nonwoven fabric, a short-fiber nonwoven fabric, and a woven or knit fabric. Of these, a long-fiber nonwoven fabric is more preferred for the following reasons. With a long-fiber nonwoven fabric, it is possible to prevent a polymer solution for forming a porous supporting layer from excessively infiltrating and passing through the substrate when poured onto the substrate. Furthermore, when a long-fiber nonwoven fabric is used, not only the porous supporting layer can be prevented from peeling off but also the trouble that substrate fluffing or the like causes membrane unevenness or results in defects such as pin-holes can be prevented. Use of a long-fiber nonwoven fabric makes it possible to prevent the trouble that the fluffing which occurs when a short-fiber nonwoven fabric is used causes uneven distribution of a poured polymer solution or results in membrane defects. Since a membrane having no membrane defects is necessary especially for producing a separation membrane element having high performance, a long-fiber nonwoven fabric is more preferred as the substrate.

Meanwhile, as the material of the porous supporting layer, it is preferred to use a polysulfone, cellulose acetate, poly(vinyl chloride), or a mixture of these. It is especially preferred to use a polysulfone which is highly stable chemically, mechanically, and thermally.

Specifically, a polysulfone made up of repeating units represented by the following chemical formula is preferred because use of this polysulfone facilitates pore diameter control and brings about high dimensional stability.

[Chem. 1]

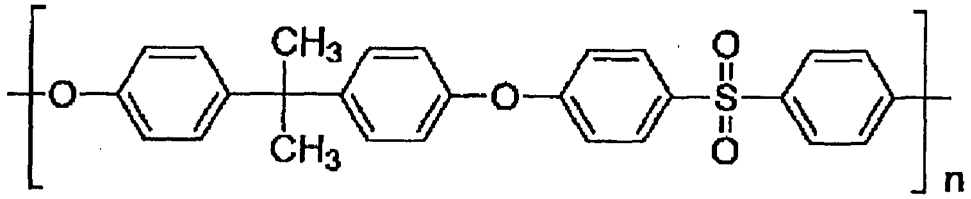

The thickness of the microporous support affects both the strength of the composite semipermeable membrane and the loading density in the element produced using the membrane. From the standpoint of obtaining a sufficient mechanical strength and a sufficient loading density, the thickness of the microporous support is preferably in the range of 30 to 300 μm, more preferably in the range of 50 to 250 μm. The thickness of the porous supporting layer as a component of the microporous support is preferably in the range of 10 to 200 μm, more preferably in the range of 20 to 100 μm.

The configuration of a porous supporting layer can be examined with a scanning electron microscope, transmission electron microscope, or atomic force microscope. For example, when a cross-section is to be examined with a scanning electron microscope, the porous supporting layer is peeled from the substrate and cut by a freeze-cutting method to obtain a sample for cross-section examination. This sample is thinly coated with platinum, platinum-palladium, or ruthenium tetrachloride, preferably with ruthenium tetrachloride, and is then examined with a high-resolution field-emission scanning electron microscope (UHR-FE-SEM) at an accelerating voltage of 3 to 6 kV. As the high-resolution field-emission scanning electron microscope, electron microscope Type S-900, manufactured by Hitachi, Ltd., or the like can be used. From the electron photomicrograph obtained, the thickness of the porous supporting layer and the projected-area equivalent-circle diameter of the surface are determined.

The thickness and pore diameter of the porous supporting layer are average values. The thickness of the porous supporting layer is an average value determined by measuring the thickness in a cross-section examination along a direction perpendicular to the thickness direction at intervals of 20 μm and averaging the values thus measured at 20 points. The pore diameter is an average value determined by counting 200 pores and averaging the projected-area equivalent-circle diameters of the pores.

In the invention, the polyamide separation function layer is a layer which can be formed by the interfacial polycondensation of a polyfunctional amine with a polyfunctional acid halide. This separation function layer hence has primary amino groups as partial structures or terminal functional groups of the polyamide which constitutes the separation function layer.

The thickness of the polyamide separation function layer is generally in the range of 0.01 to 1 μm, preferably in the range of 0.1 to 0.5 μm, from the standpoint of obtaining sufficient separating performance and a sufficient permeate amount.

The present inventors diligently made investigations on such polyamide separation function layers. As a result, the inventors have found that there is a close relationship between the yellowness of the polyamide separation function layers and the boron removal ratio thereof. Consequently, the polyamide separation function layer in the invention has a yellowness of 10 to 40. When the yellowness thereof is 10 to 25 among that yellowness range, a membrane which is especially high in water production amount among high-performance membranes is obtained. On the other hand, when the yellowness thereof is 25 to 40, a membrane which is especially high in removal ratio among high-performance membranes is obtained.

The yellowness is the degree in which the hue of a polymer deviates from colorlessness or white toward yellow, as provided for in the Japanese Industrial Standards, JIS K7373:2006, and is expressed by a plus quantity.

The yellowness of the polyamide separation function layer can be measured with a color meter. A colorless cellophane tape is applied to the surface of the separation function layer of a dried composite semipermeable membrane and then peeled off. Thus, the polyamide separation function layer can be transferred to the cellophane tape. Using the cellophane tape alone as a blank, the cellophane tape to which the polyamide separation function layer is adhered is subjected to a transmission examination. The yellowness of the layer can be thus measured. As the color meter, use can be made of SM Color Computer SM-7, manufactured by Suga Test Instruments Co., Ltd., etc.

Examples of the polyamide separation function layer having a yellowness of 10 or higher include a separation function layer of a polyamide which has a structure including an aromatic ring that has both an electron-donating group and an electron-withdrawing group and/or a structure that extends a conjugated system. These structures possessed by the polyamide make the polyamide separation function layer have a yellowness of 10 or higher. It is, however, noted that when the amount of these structures is increased, the yellowness is apt to become higher than 40. Furthermore, when those structures are introduced in a multiple combination, the resultant structure portions are large and this polyamide is apt to give a separation function layer which is reddish and has a yellowness higher than 40. As the yellowness increases beyond 40, the amount of such structures becomes larger and the structure portions become larger to close surface and inner pores of the polyamide separation function layer. Consequently, use of this polyamide separation function layer results in a considerable decrease in water permeation amount although an increase in boron removal ratio is attained. So long as the yellowness is 10 to 40, the boron removal ratio can be heightened without excessively reducing the water permeation amount.

Examples of the electron-donating group include hydroxyl, amino, and alkoxy groups. Examples of the electron-withdrawing group include carboxyl, sulfo, aldehyde, acyl, aminocarbonyl, aminosulfonyl, cyano, nitro, and nitroso groups. Examples of the structure that extends a conjugated system include a polycyclic aromatic ring, a polycyclic heterocycle, and ethenylene, ethynylene, azo, imino, arylene, and heteroarylene groups, and combinations of these structures. From the standpoint of ease of an operation for structure impartation, the azo group is preferred of these.

It is preferred that in the polyamide separation function layer, the structure including an aromatic ring that has both an electron-donating group and an electron-withdrawing group and/or the structure that extends a conjugated system should be present in a larger amount in the surface (a surface of the composite semipermeable membrane) which is on the side opposite to the porous supporting layer than in the surface which is on the side facing the porous supporting layer. By regulating the structure(s) so as to be present in a larger amount in the surface which is on the side opposite to the porous supporting layer, the boron removal ratio can be heightened while maintaining a water permeation amount more satisfactorily.

From the standpoint of heightening the boron removal ratio while maintaining a water permeation amount more satisfactorily, it is preferred that in the polyamide separation function layer, the structure including an aromatic ring having both an electron-donating group and an electron-withdrawing group and the structure that extends a conjugated system should be present in a large amount in the surface on the side opposite to the porous supporting layer (on the side facing a surface of the composite semipermeable membrane) and be present in a small amount in the surface on the side facing the porous supporting layer.

Specifically, in the case where the structure is an azo group, it is preferred that in the polyamide separation function layer, when a functional-group ratio for each of the surface which is on the side facing the porous supporting layer and the surface which is on the side opposite to the porous supporting layer is expressed by [(molar equivalent of azo groups)+(molar equivalent of phenolic hydroxyl groups)+(molar equivalent of amino groups)]/(molar equivalent of amide groups), then the value of (the functional-group ratio for the surface on the side opposite to the porous supporting layer)/(the functional-group ratio for the surface on the side facing the porous supporting layer) should be 1.1 or larger. The upper limit of the ratio between the functional-group ratios is preferably 5 or less.

The amount of the functional groups, e.g., amide groups, of the polyamide separation function layer can be determined through analysis made by, for example, X-ray photoelectron spectroscopy (XPS). Specifically, the amount thereof can be determined by using the method of X-ray photoelectron spectroscopy (XPS) shown as an example in Journal of Polymer Science, Vol.26, 559-572 (1988) and Nihon Setchaku Gakkai-shi, Vol.27, No.4 (1991).

For data processing, the position of the Cls peak assigned to neutral carbon (CHx) is adjusted to 284.6 eV. The proportion of carbon atoms having a nitrogen atom or oxygen atom bonded thereto to carbonyl carbon atoms is determined through peak separation. In the case of amide groups, carbon atoms to which a nitrogen atom has been bonded and carbonyl carbon atoms appear in a ratio of 1:1. In the case of an aromatic polyamide, the value obtained by subtracting the proportion of carbonyl carbon atoms from the proportion of carbon atoms bonded to a nitrogen atom or oxygen atom is the proportion of [(molar equivalent of azo groups)+(molar equivalent of phenolic hydroxyl groups)+(molar equivalent of amino groups)]. The ratio of this value to the proportion of carbonyl carbon atoms is expressed as [(molar equivalent of azo groups)+(molar equivalent of phenolic hydroxyl groups)+(molar equivalent of amino groups)]/(molar equivalent of amide groups).

In the invention, the concentration of substances extracted from the substrate is low despite the yellowness of the polyamide separation function layer being 10 to 40.

The term "extracted substances" means components which are extracted from the separation membrane to come into the permeated liquid when a liquid is passed through the separation membrane. Examples of the extracted substances include the unreacted polyfunctional amine, hydrolyzates of polyfunctional acid halide, oligomers of the polyfunctional amine and polyfunctional acid halide, the compound used when the polyamide separation function layer was chemically treated, and products formed from those extractable substances through reactions in the chemical treatment. It is thought that the substances extractable from the separation membrane are contained in the porous supporting layer and in the substrate. Since substances in the substrate are apt to be extracted to come into the permeated liquid, the presence of a large amount of extractable substances contained in the substrate may pose a problem when the membrane is used in the form of a separation membrane element. Consequently, it is necessary in the invention to reduce the amount of extractable substances contained in the substrate.

A method for determining the amount of extractable substances contained in a substrate is as follows. The substrate is peeled from the composite semipermeable membrane, and the substrate peeled is immersed in a solvent

in which the substrate is insoluble. The immersion is continued until the extractable substances have been sufficiently extracted with the solvent. The substrate is taken out of the solvent, dried by heating, allowed to cool to room temperature in a desiccator, and then weighed. Subsequently, the extract is concentrated, and the weight of the extracted substances is calculated. Alternatively, the extracted components are examined with a spectrophotometer for ultraviolet and visible region, high-performance liquid chromatography, gas chromatography, or the like for which calibration curves have been obtained beforehand, and the amount of the substances extracted from the substrate is calculated. Using the following equation, the concentration of substances extracted from the substrate is determined.

$$\text{Concentration of extracted substances (wt\%)} = 100\times(\text{weight of extracted substances})/(\text{weight of dry substrate})$$

The extraction of extractable substances is conducted by immersing the substrate in ethanol for 8 hours. It is thought that by the 8-hour immersion of the substrate in ethanol, the extractable substances are substantially wholly extracted with the ethanol.

In case where a large amount of substances are extracted from the substrate, there is a possibility that when the separation membrane or separation membrane element is used, extractable substances might be extracted to come into the permeated liquid, resulting in a decrease in the purity of the permeated liquid. It becomes necessary to clean the separation membrane or separation membrane element in order to avoid such a decrease in purity, and this cleaning may pose problems such as a decrease in performance due to the chemical used for the cleaning, an increase in cleaning cost, etc. Consequently, in the invention, the concentration of substances extracted from the substrate is $1.0\times10^{-3}$% by weight or less. Although preferably 0%, the lower limit thereof is practically about $1.0\times10^{-5}$% by weight.

An example of methods for producing the composite semipermeable membrane and separation membrane element described above is explained next. In the example explained below, a separation membrane is used to fabricate an element and the separation membrane is thereafter subjected to a specific treatment to thereby regulate the yellowness of the polyamide separation function layer and the concentration of substances extracted from the substrate to values within the specific ranges. However, it is a matter of course that the same treatment may be performed before the separation membrane is used to fabricate an element.

First, a microporous support is prepared. The microporous support can be selected from various commercial materials such as "Millipore Filter VSWP" (trade name), manufactured by Millipore Corp., and "Ultrafilter UK10" (trade name), manufactured by Toyo Roshi Kaisha, Ltd. It is also possible to produce a microporous support in accordance with the method described in Office of Saline Water Research and Development Progress Report, No.359 (1968). Specifically, use may be made of a method in which an N,N-dimethylformamide (DMF) solution of, for example, the polysulfone is poured in a given thickness on a densely woven polyester fabric or nonwoven fabric (substrate) and the solution applied is subjected to wet coagulation in water. Thus, a microporous support which includes the substrate and a porous supporting layer formed thereon is obtained in which the surface of the porous supporting layer is mostly occupied by fine pores having a diameter of tens of nanometers or less.

Next, a polyamide separation function layer is formed on the microporous support. In this step, an aqueous solution containing a polyfunctional amine and an organic-solvent solution which contains a polyfunctional acid halide and is water-immiscible are, for example, used to conduct interfacial polycondensation on a surface of the microporous support. Thus, the framework of a separation function layer can be formed.

The term "polyfunctional amine" herein means an amine that has at least two amino groups per one molecule thereof, at least one of which is a primary amino group. Examples thereof include aromatic polyfunctional amines such as the phenylenediamine in which the two amino groups have been bonded to the benzene ring in any of the ortho, meta, and para positions, xylylene diamines, 1,3,5-triaminobenzene, 1,2,4-triaminobenzene, 3,5-diaminobenzoic acid, 3-aminobenzylamine, and 4-aminobenzylamine, aliphatic amines such as ethylene diamine and propylene diamine, and alicyclic polyfunctional amines such as 1,2-diaminocyclohexane, 1,4-diaminocyclohexane, 4-aminopiperidine, and 4-aminoethylpiperazine. Preferred of these are the aromatic polyfunctional amines each having 2 to 4 amino groups per one molecule thereof, when the separation selectivity, permeability, and heat resistance of the membrane are taken into account. Suitable as such aromatic polyfunctional amines are m-phenylenediamine, p-phenylenediamine, and 1,3,5-triaminobenzene. From the standpoints of availability and handleability, it is more preferred to use m-phenylenediamine (hereinafter referred to as mPDA) among these.

One of those polyfunctional amines may be used alone, or two or more thereof may be used simultaneously. When two or more amines are simultaneously used, two or more of the amines shown above may be used in combination or any of those amines may be used in combination with an amine which has at least two secondary amino groups per one molecule thereof. Examples of the amine having at least two secondary amino groups per one molecule thereof

include piperazine and 1,3-bispiperidylpropane.

The term "polyfunctional acid halide" means an acid halide which has at least two halogenated carbonyl groups per one molecule thereof. Examples of trifunctional acid halides include trimesoyl chloride, 1,3,5-cyclohexanetricarbonyl trichloride, and 1,2,4-cyclobutanetricarbonyl trichloride. Examples of bifunctional acid halides include aromatic bifunctional acid halides such as biphenyldicarbonyl dichloride, azobenzenedicarbonyl dichloride, terephthaloyl chloride, isophthaloyl chloride, and naphthalenedicarbonyl chloride, aliphatic bifunctional acid halides such as adipoyl chloride and sebacoyl chloride, and alicyclic bifunctional acid halides such as cyclopentanedicarbonyl dichloride, cyclohexanedicarbonyl dichloride, and tetrahydrofurandicarbonyl dichloride. When reactivity with the polyfunctional amine is taken into account, it is preferred that the polyfunctional acid halide should be a polyfunctional acid chloride. When the separation selectivity and heat resistance of the membrane are taken into account, it is preferred that the polyfunctional acid halide should be a polyfunctional aromatic acid chloride having 2 to 4 chlorinated carbonyl groups per one molecule thereof. More preferred of such acid chlorides is trimesoyl chloride from the standpoints of availability and handleability. One of those polyfunctional acid halides may be used alone, or two or more thereof may be used simultaneously.

It is preferred that the polyfunctional amine(s) and/or the polyfunctional acid halide(s) should include a compound having a functionality of 3 or higher.

In order to conduct the interfacial polycondensation on the microporous support, an aqueous solution of a polyfunctional amine is first brought into contact with the microporous support. It is preferred that the aqueous solution should be evenly and continuously brought into contact with the surface of the microporous support.
Specifically, examples of methods therefor include a method in which the surface of the microporous support is coated with the aqueous solution of a polyfunctional amine and a method in which the microporous support is immersed in the aqueous solution of a polyfunctional amine. The period of contact between the microporous support and the aqueous solution of a polyfunctional amine is preferably in the range of 1 second to 10 minutes, more preferably in the range of 10 seconds to 3 minutes.

In the aqueous solution of a polyfunctional amine, the concentration of the polyfunctional amine is preferably in the range of 0.1 to 20% by weight, more preferably in the range of 0.5 to 15% by weight. So long as the concentration thereof is within that range, sufficient salt-removing performance and water permeability can be obtained.

The aqueous solution of a polyfunctional amine may contain ingredients such as, for example, a surfactant, organic solvent, alkaline compound, and antioxidant so long as these ingredients do not inhibit the reaction between the polyfunctional amine and the polyfunctional acid halide. The surfactant has the effect of improving the wettability of the surface of the microporous support to reduce the interfacial tension between the aqueous amine solution and the nonpolar solvent. There are cases where an organic solvent functions as a catalyst for the interfacial polycondensation reaction and where addition thereof to the aqueous solution of a polyfunctional amine enables the interfacial polycondensation reaction to be efficiently conducted.

After the aqueous solution of a polyfunctional amine has been brought into contact with the microporous support, the excess solution is sufficiently removed so that no droplets remain on the membrane. By sufficiently removing the excess solution, the trouble that residual droplets leave membrane defects after membrane formation to lower the membrane performance can be avoided. For removing the excess solution, use can be made, for example, of a method in which the microporous support with which the aqueous solution of a polyfunctional amine was contacted is vertically held to allow the excess aqueous solution to flow down naturally, a method in which a stream of nitrogen or the like is blown from an air nozzle against the microporous support to forcedly remove the excess solution, or the like, as described in JP-A-2-78428. After the removal of the excess aqueous solution, the membrane surface may be subjected to drying to partly remove the water contained in the solution.

Subsequently, an organic-solvent solution which contains a polyfunctional acid halide is brought into contact with the microporous support with which the aqueous solution of a polyfunctional amine was contacted, thereby forming the framework of a crosslinked-polyamide separation function layer through interfacial polycondensation. For bringing the organic-solvent solution of a polyfunctional acid halide into contact with the aqueous-solution phase containing a polyfunctional amine compound, the same method as for the coating of the microporous support with the aqueous solution of a polyfunctional amine may be used.

The concentration of the polyfunctional acid halide in the organic-solvent solution is preferably in the range of 0.01 to 10% by weight, more preferably in the range of 0.02 to 2.0% by weight. The reasons for this are as follows. By regulating the concentration thereof to 0.01 % by weight or higher, a sufficient reaction rate is obtained. By regulating the concentration thereof to 10% by weight or less, side reactions can be inhibited from taking place. It is more preferred to incorporate an acylation catalyst, such as DMF, into the organic-solvent solution because the interfacial polycondensation is accelerated by the catalyst.

It is desirable that the organic solvent for dissolving a polyfunctional acid halide therein should be a water-immiscible organic solvent in which the polyfunctional acid halide is soluble and which does not destroy the microporous support. The organic solvent may be one which is inert to both the polyfunctional amine compound and the polyfunctional acid halide. Preferred examples thereof include hydrocarbon compounds such as n-hexane, n-octane, and n-decane.

It is preferred that after the aqueous solution of a polyfunctional amine and the organic-solvent solution of a polyfunctional acid halide were brought into contact with the microporous support to conduct interfacial polycondensation to thereby form a separation function layer including a crosslinked polyamide on the microporous support, the excess solvent should be removed. For the solvent removal, use can be made, for example, of a method in which the membrane is vertically held to allow the excess organic solvent to flow down naturally, thereby removing the excess solvent. In this case, the period of vertically holding the membrane is preferably 1 second to 5 minutes, more preferably 10 seconds to 3 minutes. In case where the holding period is too short, a separation function layer is not completely formed. In case where the holding period is too long, the organic solvent is excessively removed and defects are apt to result. In either case, a decrease in performance is apt to occur.

Furthermore, the separation membrane obtained by forming the separation function layer on the microporous support is subjected to a hydrothermal treatment at a temperature in the range of 40 to 100°C, preferably in the range of 60 to 100°C, for 1 to 10 minutes, more preferably 2 to 8 minutes. Thus, the solute-rejecting performance and water permeability of the composite semipermeable membrane can be further improved.

Next, this separation membrane is used to form an element. For example, in the case of producing a spiral separation membrane element, the separation membrane is wound on the periphery of a central tube together with a feed-side passage material and a permeate-side passage material.

Thereafter, a structure which includes an aromatic ring having both an electron-donating group and an electron-withdrawing group and/or a structure which extends a conjugated system is imparted to the polyamide separation function layer of the separation membrane incorporated into the element.

Examples of methods for imparting the structure(s) to the polyamide separation function layer include a method in which compounds having the structures are caused to be held on the polyamide separation function layer by adsorption, etc. and/or a method in which the polyamide separation function layer is chemically treated to introduce the structures through covalent bonds, etc. From the standpoint of enabling the polyamide separation function layer to retain the structures over a long period, it is preferred to use the method in which the polyamide separation function layer is chemically treated to introduce the structures through covalent bonds, etc. In the case where the yellowness is to be heightened, it is preferred that the method in which the structures are caused to be held by adsorption, etc. and the method in which the structures are introduced through covalent bonds, etc. should be used in combination.

For example, in the case where azo groups, which are preferred from the standpoint of an operation for structure impartation, are imparted to the polyamide separation function layer, examples of methods therefor include a method (i) in which the polyamide separation function layer having primary amino groups is treated to convert the primary amino groups into azo groups, thereby introducing the azo groups linked to the polyamide separation function layer through covalent bonds. Examples thereof further include a method (ii) in which a compound having an azo group is yielded on the surface or in an inner part of the composite semipermeable membrane and the azo groups formed are adsorbed onto the polyamide separation function layer.

More specifically, examples of the method (i) include a method in which an aqueous solution of a polyfunctional amine is brought into contact with a solution containing a polyfunctional acid halide on the microporous support including a substrate and a porous supporting layer, to form a polyamide separation function layer having primary amino groups and, thereafter, a reagent (A) which reacts with the primary amino groups to yield a diazonium salt or a derivative thereof and a reagent (B) which reacts with the diazonium salt or the derivative thereof are brought into contact with the polyamide separation function layer. By bringing the reagent (A) into contact with the polyamide separation function layer having primary amino groups, a diazonium salt or a derivative thereof is yielded. The diazonium salt or the derivative thereof reacts with water and is thereby converted to phenolic hydroxyl groups. Furthermore, the diazonium salt or the derivative thereof reacts also with aromatic rings of the structure constituting the microporous support or separation function layer or with the aromatic ring of the compound held on the separation function layer, thereby forming azo groups. An improvement in boron removal ratio is therefore expected.

On the other hand, examples of the method (ii) include a method in which an aqueous solution of a polyfunctional amine is brought into contact with a solution containing a polyfunctional acid halide on the microporous support including a substrate and a porous supporting layer, to form a polyamide separation function layer having primary amino groups and, thereafter, a reagent (C) which has a primary amino group and a reagent (D) which reacts with the primary amino group to yield a diazonium salt or a derivative thereof are brought into contact with each other on the polyamide separation function layer. In this method, the primary amino group of the reagent (C) reacts with the reagent (D) to yield a diazonium salt or a derivative thereof on the polyamide separation function layer or in an inner part thereof, and the diazonium salt or the derivative thereof reacts with the aromatic ring of the compound held on the separation function layer. As a result, a compound having an azo group is formed on the surface of the composite semipermeable membrane or in an inner part thereof and is adsorbed. Consequently, an improvement in boron removal ratio is expected.

For subjecting the separation membrane incorporated into the element to the treatment (i) or (ii), use may be made of a method in which the reagents are dissolved in respective solvents and the resultant solutions are passed through the element.

Conjugated systems are extended by the azo groups thus imparted to the polyamide separation function layer. As a result, the polyamide separation function layer has a yellow to orange color and has a yellowness of 10 or higher.

From the standpoints of regulating the yellowness of the polyamide separation function layer to a value within that range thereby obtaining a membrane which is excellent in terms of both water permeation amount and boron removal ratio, it is preferred that the separation function layer should not be treated with hot water or the like during the period from contact of one reagent with the separation function layer to contact of the other reagent therewith.

In the case of the method (i), the reagent (B) may be contacted with the separation function layer either before the reagent (A) is contacted therewith or after the reagent (A) is contacted therewith. Alternatively, the reagent (B) may be contacted with the separation function layer both before and after the reagent (A) is contacted therewith. Furthermore, the reagent (A) and the reagent (B) may be simultaneously contacted with the separation function layer. In the case of the method (ii) also, the reagent (C) may be contacted with the separation function layer either before the reagent (D) is contacted therewith or after the reagent (D) is contacted therewith. Alternatively, the reagent (C) may be contacted with the separation function layer both before and after the reagent (D) is contacted therewith. Furthermore, the reagent (C) and the reagent (D) may be simultaneously contacted with the separation function layer. Moreover, the method (i) and the method (ii) may be simultaneously employed. In this case, the primary amino groups of the polyamide separation function layer are converted to azo groups, which are linked to the polyamide separation function layer through covalent bonds, and simultaneously therewith, a compound having an azo group is separately yielded and is adsorbed onto the polyamide separation function layer.

With respect to the reagents (A) and (D), these reagents are designated by the different symbols of (A) and (D) in order to discriminate between the two reagents as to which reagent reacts with the primary amino groups of the polyamide separation function layer to yield a diazonium salt or the like or which reagent reacts mainly with the primary amino group of the reagent (C) to yield a diazonium salt or the like. However, the two reagents are substantially the same compound. Furthermore the reagent (B) and the reagent (C) perform different functions, but the two reagents, as a consequence, may be the same compound. As each reagent, one compound may be used alone or a mixture of two or more compounds may be used. The separation function layer may be brought into contact with different reagents two or more times.

Specifically, examples of the reagents (A) and (D), which react with a primary amino group to yield a diazonium salt or a derivative thereof, include aqueous solutions of nitrous acid, salts thereof, nitrosyl compounds, and the like. Since an aqueous solution of nitrous acid or of a nitrosyl compound is apt to decompose while evolving a gas, it is preferred to gradually yield nitrous acid, for example, by the reaction of a nitrous acid salt with an acidic solution. Although nitrous acid salts generally react with a hydrogen ion to yield nitrous acid ($HNO_2$), the acid is efficiently yielded when the aqueous solution has a pH of 7 or less, preferably 5 or less, more preferably 4 or less. Especially preferred from the standpoint of handleability is an aqueous solution of sodium nitrite reacted with hydrochloric acid or sulfuric acid in aqueous solution.

Examples of the reagent (B), which reacts with the diazonium salt or derivative thereof, include compounds having an aromatic ring or heteroaromatic ring which is rich in electrons. Examples of the compounds having an aromatic ring or heteroaromatic ring which is rich in electrons include aromatic amine derivatives, heteroaromatic amine derivatives, phenol derivatives, and hydroxy heteroaromatic derivatives. Specific examples of these compounds include aniline, the methoxyaniline in which the methoxy group has been bonded to the benzene ring in any of the ortho, meta, and para positions, the phenylenediamine in which the two amino groups have been bonded to the benzene ring in any of the ortho, meta, and para positions, the aminophenol in which the amino group and the hydroxyl group have been bonded to the benzene ring in any of the ortho, meta, and para positions, 1,3,5-triaminobenzene, 1,2,4-triaminobenzene, 3,5-diaminobenzoic acid, 3-aminobenzylamine, 4-aminobenzylamine, sulfanilic acid, 3,3'-dihydroxybenzidine, 1-aminonaphthalene, 2-aminonaphthalene, 1-amino-2-naphthol-4-sulfonic acid, 2-amino-8-naphthol-6-sulfonic acid, 2-amino-5-naphthol-7-sulfonic acid, N-alkylated forms and salts thereof, phenol, o-, m-, or p-cresol, catechol, resorcinol, hydroquinone, phloroglucinol, hydroxyquinol, pyrogallol, tyrosine, 1-naphthol, 2-naphthol, and salts thereof.

Examples of the reagent (C), which is converted to a diazonium salt or a derivative thereof, include aliphatic amine derivatives, alicyclic amine derivatives, aromatic amine derivatives, and heteroaromatic amines. From the standpoint of the stability of the diazonium salt or derivative thereof to be yielded, aromatic amine derivatives and heteroaromatic amine derivatives are preferred. Specific examples of the aromatic amine derivatives and the heteroaromatic amine derivatives include aniline, the methoxyaniline in which the methoxy group has been bonded to the benzene ring in any of the ortho, meta, and para positions, the phenylenediamine in which the two amino groups have been bonded to the benzene ring in any of the ortho, meta, and para positions, the aminophenol in which the amino group and the hydroxyl group have been bonded to the benzene ring in any of the ortho, meta, and para positions, 1,3,5-triaminobenzene, 1,2,4-triaminobenzene, 3,5-diaminobenzoic acid, 3-aminobenzylamine, 4-aminobenzylamine, sulfanilic acid, 3,3'-dihydroxybenzidine, 1-aminonaphthalene, 2-aminonaphthalene, 1-amino-2-naphthol-4-sulfonic acid, 2-amino-8-naphthol-6-sulfonic acid, 2-amino-5-naphthol-7-sulfonic acid, and salts thereof.

From the standpoint of reducing the concentration of extracted substances to the value shown above while

keeping the yellowness of the separation function layer within the range shown above, it is preferred that the contact between the reagent (A) and reagent (B) described above or the contact between the reagent (C) and the reagent (D) should be conducted so that the following requirements are satisfied. Namely, it is preferred that the product (ppm·min) of the concentration of the reagent (B) and the period of contact between the reagent (B) and the polyamide separation function layer should be regulated to 200,000 ppm·min or less and that the reagent (A) should be brought into contact with the surface of the polyamide separation function layer at a pressure of 0.2 MPa or higher. It is also preferred that the product (ppm·min) of the concentration of the reagent (C) and the period of contact between the reagent (C) and the polyamide separation function layer should be regulated to 200,000 ppm·min or less and that the reagent (D) should be brought into contact with the surface of the polyamide separation function layer at a pressure of 0.2 MPa or higher. As a result, the yellowness of the separation function layer and the concentration of substances extracted from the substrate become within the ranges shown above, and the ratio between functional-group ratios also is apt to become 1.1 or larger.

The pressure at which the reagents (B) and (C) are brought into contact with the polyamide separation function layer may be ordinary pressure or an elevated pressure. However, from the standpoint of attaining both improvements in water permeability and removal ratio and a reduction in the concentration of substances extracted from the substrate, it is preferred that the product (ppm·min) of the concentration of the reagent (B) and the period of contact between the reagent (B) and the polyamide separation function layer and the product (ppm·min) of the concentration of the reagent (C) and the period of contact between the reagent (C) and the polyamide separation function layer should be regulated to 200,000 ppm·min or less. These products preferably are 150,000 ppm·min or less. The lower limit thereof is preferably 10 ppm·min from the standpoint of carrying out the reaction of each reagent.

From the standpoint of improving the boron removal ratio while further heightening the water permeability, it is preferred that the reagents (B) and (C) should be brought into contact from the front-surface side (the side opposite to the porous supporting layer) of the polyamide separation function layer.

The solvent for dissolving the reagent (B) or (C) therein may be any solvent in which the reagent (B) or (C) is soluble and which does not erode the separation membrane. The solutions obtained by dissolving these reagents may contain ingredients such as, for example, a surfactant, acidic compound, alkaline compound, and antioxidant so long as these ingredients do not inhibit the functions of the reagents.

It is desirable that the solutions containing the reagents dissolved therein should have a temperature of 10 to 90°C. In case where the temperature thereof is lower than 10°C, the reactions are less apt to proceed and the desired effects are not obtained. In case where the temperature thereof is higher than 90°C, polymer shrinkage occurs, resulting in a decrease in water permeation amount.

Meanwhile, with respect to the solvent for dissolving the reagent (A) or (D) therein, any solvent, e.g., water, may be used so long as the reagent is soluble therein and the solvent does not erode the composite semipermeable membrane. The solution may contain ingredients such as, for example, a surfactant, acidic compound, and alkaline compound so long as these ingredients do not inhibit the reaction between a primary amino group and the reagent.

In the solution containing the compound (A) or (D) dissolved therein, the concentration of the reagent (A) or (D) is preferably in the range of 0.001 to 1% by weight. In case where the concentration thereof is less than 0.001% by weight, a sufficient effect is not obtained. In case where the concentration thereof is higher than 1%, this solution is difficult to handle. It is preferred that the solution containing the reagent (A) or (D) dissolved therein should have a temperature of 15 to 45°C. In case where the temperature thereof is lower than 15°C, the reaction requires much time. In case where the temperature thereof exceeds 45°C, this solution is difficult to handle because the reagent (A) or (D) decomposes quickly.

The period of contact between the reagent (A) or (D) and the separation membrane may be any period so long as a diazonium salt and/or a derivative thereof is yielded. A high concentration renders a short-time treatment possible, while a low concentration necessitates a prolonged period for the treatment. When the solution has a concentration within that range, the period of contact is preferably 240 minutes or less, more preferably 120 minutes or less, from the standpoint of the stability of the solution.

It is preferred that the pressure at which the reagents (A) and (D) are brought into contact with the surface of the separation function layer should be 0.2 MPa or higher. By applying a pressure, the portions with which the fluid to be treated with the separation membrane will come into contact can be efficiently reacted. Furthermore, when the treatment is conducted under pressure, the reagent solution undergoes reverse osmosis with respect to the separation function layer and the substrate can be cleaned with the permeated liquid. In case where the pressure is less than 0.2 MPa, reverse osmosis is only slight because the difference between the pressure and the osmotic pressure of the reagent solution is small, resulting in a low cleaning effect. By thus regulating the pressure to 0.2 MPa or higher, preferably 0.3 MPa or higher, the concentration of substances extracted from the substrate can be reduced to $1.0\times10^{-3}$% by weight or less. The upper limit thereof is preferably 10 MPa or less.

After the treatment (i) or (ii) has been conducted, the separation membrane can be separately brought into contact with a reagent in order to deactivate the reagent (A) or (D) remaining thereon or to convert the functional group

of the residual diazonium salt or derivative thereof. Examples of the reagent to be used here include chloride ions, bromide ions, cyanide ions, iodide ions, fluoroboric acid, hypophosphorous acid, sodium hydrogen sulfite, and thiocyanic acid. By the reaction with sodium hydrogen sulfite or with sulfite ions, not only the residual reagent (A) or (D) can be deactivated but also a substitution reaction is induced to replace amino groups with sulfo groups.

The separation membrane element thus produced can be used alone. Alternatively, such separation membrane elements can be connected serially or in parallel and disposed in a pressure vessel to configure a composite-semipermeable-membrane module.

The separation membrane element or the separation membrane module can be combined with a pump for feeding raw water thereto, a device for pretreating the raw water, or the like to thereby configure a fluid separation device. By using this separation device, raw water can be separated into permeate, e.g., potable water, and concentrate which does not permeate the membrane. Thus, water suitable for a purpose can be obtained.

As the operation pressure for the fluid separation device becomes higher, the salt rejection improves. However, since the energy required for the operation increases and when the durability of the composite semipermeable membrane is taken into account, it is preferred that the operation pressure at the time when water to be treated is passed through the composite semipermeable membrane should be 1.0 to 10 MPa. With respect to the temperature of the feed water, an increase in the temperature thereof results in a decrease in salt removal ratio, while the membrane permeation flux decreases as the feed water temperature declines. Consequently, the temperature thereof is preferably 5 to 45°C. With respect to the pH of the feed water, high pH values may result in generation of scales of magnesium, etc. in the case where the feed water is water having a high salt concentration, such as seawater. Furthermore, there is a concern about a membrane deterioration due to high-pH operation. It is therefore preferred to operate the device in a neutral region.

Examples of the raw water to be treated with the composite semipermeable membrane in the invention include liquid mixtures having a TDS (total dissolved solids) content of 500 mg/L to 100 g/L, such as seawater, brine water, and wastewater. In general, TDS means the content of total dissolved solids and is expressed in "mass/volume" or "weight ratio". According to a definition, the content can be calculated from the weight of a residue obtained by evaporating, at a temperature of 39.5 to 40.5°C, a solution obtained by filtration through a 0.45-μm filter. In a simpler method, the content is determined through conversion from practical salinity (S).

## EXAMPLES

The invention will be explained below in more detail by reference to Examples, but the invention should not be construed as being limited by the following Examples in any way.

The concentration of substances extracted from the substrate, the yellowness of the polyamide separation function layer, the ratio between functional-group ratios for the polyamide separation function layer, and various properties of the element in the Examples and Comparative Examples were determined in the following manners. With respect to each of the concentration of substances extracted from the substrate, the yellowness, and the ratio between functional-group ratios for the polyamide separation function layer, measurements were made on different five portions and an average value thereof was determined.

(Concentration of Substances extracted from Substrate)

The separation membrane element was disassembled, and the composite semipermeable membrane was taken out. Droplets on the composite semipermeable membrane were removed, and a piece having dimensions of 10 × 10 cm was cut out of the composite semipermeable membrane. The substrate was peeled from the piece and immersed in 50 g of ethanol for 8 hours. The components extracted with the ethanol were examined with a spectrophotometer for ultraviolet and visible region (UV-2450, manufactured by Shimadzu Corp.) for which calibration curves had been obtained beforehand, and the weight of the substances extracted from the substrate was calculated. Subsequently, the substrate was taken out of the ethanol, dried by heating at 60°C for 4 hours, allowed to cool to room temperature in a desiccator, and then weighed. The concentration of the substances extracted from the substrate was determined using the following equation.

$$\text{Concentration of extracted substances (wt\%)} = 100 \times (\text{weight of extracted substances})/(\text{weight of dry substrate})$$

(Yellowness)

The separation membrane element was disassembled, and the composite semipermeable membrane was taken out. This composite semipermeable membrane was dried at room temperature for 8 hours. Thereafter, a cellophane tape (CT405AP-18, manufactured by Nichiban Co., Ltd.) was applied to the surface of the polyamide separation function layer and then slowly peeled off to adhere the polyamide separation function layer to the cellophane tape. The cellophane tape peeled off was fixed to a glass plate and examined with SM Color Computer SM-7, manufactured by Suga Test Instruments Co., Ltd., to calculate the yellowness of the polyamide separation function layer.

(Ratio between Functional-group Ratios for Polyamide Separation Function Layer)

The substrate was peeled and removed from the composite semipermeable membrane which had been dried in the manner described above, and the separation function layer/porous supporting layer portion was fixed to a silicon wafer so that the separation function layer or the porous supporting layer faced outward. The porous supporting layer was removed by dissolution with dichloromethane to obtain a sample for examining the surface corresponding to the front surface of the composite semipermeable membrane (the surface on the side opposite to the porous supporting layer) and a sample for examining the surface facing the porous supporting layer. These samples were examined by XPS to determine [(molar equivalent of azo groups)+(molar equivalent of phenolic hydroxyl groups)+(molar equivalent of amino groups)] and (molar equivalent of amide groups). The functional-group ratio for each sample, which is represented by the following equation, and the ratio between these functional-group ratios were determined.

Functional-group ratio = [(molar equivalent of azo groups)+(molar equivalent of phenolic hydroxyl groups)+(molar equivalent of amino groups)]/(molar equivalent of amide groups)

Ratio between functional-group ratios = (functional-group ratio for the surface on the side opposite to the porous supporting layer)/(functional-group ratio for the surface on the side facing the porous supporting layer)

Apparatus: ESCALAB220iXL (manufactured by VG Scientific, the United Kingdom)
Excitation X ray: aluminum K$\alpha$ 1 and 2 lines (1486.6 eV)
X ray output: 10 kV, 20 mV
Photoelectron take-off angle: 90°
(Various Properties of Element)
The separation membrane element was placed in a pressure vessel, and this device was operated for 3 hours under the conditions of a temperature of 25°C, pH of 6.5, and operation pressure of 5.5 MPa using 3.5% by weight aqueous sodium chloride solution which contained boron in an amount of 5 ppm (recovery: 8%). The quality of the resultant permeate and the quality of the feed water were determined, and the amount of the permeate was measured. From the results, the following properties were determined.

(Salt Removal Ratio (TDS Removal Ratio))

TDS removal ratio (%) = 100×{1-(TDS concentration of permeate)/(TDS concentration of feed water)}

(Water Production Amount)

The amount of the permeate obtained from the feed water (seawater) was expressed in terms of the amount of water production per membrane element per day ($m^3$/day).

(Boron Removal Ratio)

The feed water and the permeate were examined for boron concentration with an ICP emission analyzer (P-4010, manufactured by Hitachi, Ltd.), and the boron removal ratio was determined using the following equation.

$$\text{Boron removal ratio (\%)} = 100\times\{1\text{-(boron concentration of permeate)/(boron concentration of feed water)}\}$$

(REFERENCE EXAMPLE 1)

A 15.7% by weight DMF solution of a polysulfone was cast in a thickness of 200 μm on a short-fiber nonwoven polyester fabric produced by a papermaking method (air permeability, 1 $cc/cm^2/sec$) at room temperature (25°C), and the coated nonwoven fabric was immediately immersed in pure water and allowed to stand therein for 5 minutes. Thus, a roll of a microporous support (thickness, 210 to 215 μm) was produced. A 4.0% by weight aqueous solution of mPDA was applied to the microporous support obtained, and nitrogen was blown thereagainst from an air nozzle to remove the excess aqueous solution from the surface of the support membrane. Thereafter, an n-decane solution containing 0.165% by weight trimesoyl chloride was applied thereto so that the surface was completely wetted. Subsequently, the excess solution was removed from the membrane by air blowing, and the membrane was rinsed with 90°C hot water for 2 minutes. Thus, a roll of a composite semipermeable membrane which included a separation function layer formed on the microporous support was obtained.

The composite semipermeable membrane obtained was folded and cut to produce 26 pieces of leaf-like sheets. These 26 pieces of life-like sheets were stacked so that the edges where the sheets had been folded were disposed along a direction which was offset with respect to the stacking direction, and each folded sheet was bonded to the adjacent folded sheet(s) by uniting the sheets at the three edges other than the folded edge for each sheet. This operation was conducted so as to result in a separation membrane element having an effective area of 37 $m^2$. Furthermore, a net (thickness: 900 μm; pitch: 3 mm × 3 mm) serving as a feed-side passage material and a tricot (thickness: 300 μm; groove width: 200 μm; ridge width: 300 μm; groove depth: 105 μm) serving as a permeate-side passage material were alternately disposed between the adjacent separation membranes in the stack. This stack of the leaf-like sheets was spirally wound to produce a separation membrane element. A film was wound on the periphery of the element and fixed with a tape. Thereafter, edge cutting, edge plate attachment, and filament winding were conducted to produce an 8-inch element.

(EXAMPLE 1)

The separation membrane element obtained in Reference Example 1 was placed in a pressure vessel, and the element was subjected to step (a), in which a 500-ppm aqueous solution of mPDA was passed through the element and this element was allowed to stand still for 60 minutes and then flushed with 30°C pure water. Subsequently, the element was subjected to step (b) in which 250-ppm aqueous sodium nitrite solution that had been regulated to pH 3 with sulfuric acid was passed through the element for 30 minutes at room temperature (30°C) and an elevated pressure of 1.0 MPa and the element was then flushed with pure water. Thereafter, a 0.1% by weight aqueous solution of sodium sulfite was passed through the element, which was then allowed to stand still for 10 minutes.

The separation membrane element thus obtained was evaluated.

The production conditions for the separation membrane element are shown in Table 1, and the results of the evaluation of this separation membrane element are shown in Table 2.

(EXAMPLES 2 TO 7 AND COMPARATIVE EXAMPLES 1 TO 6)

The same treatment as in Example 1 was conducted, except that step (a), step (b), and the sequence of performing these steps were changed as shown in the conditions given in Table 1. The elements were evaluated in the same manners as in Example 1. The results thereof are shown in Table 2.

(REFERENCE EXAMPLE 2)

A separation membrane element was produced in the same manner as in Reference Example 1, except that a long-fiber nonwoven polyester fabric was used as a substrate.

(EXAMPLE 8)

The separation membrane element obtained in Reference Example 2 was used and treated in the same manner as in Example 1, except that step (a), step (b), and the sequence of performing these steps were changed as shown in the conditions given in Table 2. The element was evaluated in the same manners as in Example 1. The results thereof are shown in Table 2.

(COMPARATIVE EXAMPLE 7)

A solution (pH 6) of both sodium hypochlorite (chlorine: 20 ppm) and 10 ppm sodium bromide was prepared. The separation membrane element obtained in Reference Example 1 was placed in a pressure vessel, and the solution prepared was passed through the element for 30 minutes at room temperature (30°C) and an elevated pressure of 1.5 MPa. Thereafter, the element was flushed with pure water. The results obtained are shown in Table 2.

[Table 1]

| | Step (a) | | | | | Step (b) | | | Remarks (sequence of steps) |
|---|---|---|---|---|---|---|---|---|---|
| | Compound | Concentration of the compound (ppm) | Period of contact (min) | Pressure (MPa) | Concentration × time (ppm·min) | Concentration of sodium nitrite (ppm) | Period of contact (min) | Pressure (MPa) | |
| Example 1 | mPDA | 500 | 60 | 0 | 30000 | 80 | 30 | 1.0 | step (a) → step (b) |
| Example 2 | mPDA | 1300 | 30 | 1.5 | 39000 | 80 | 30 | 1.5 | step (b) → step (a) |
| Example 3 | phloroglucinol | 1000 | 60 | 1.5 | 60000 | 50 | 60 | 1.5 | steps (a) and (b), simultaneous |
| Example 4 | mPDA | 300 | 60 | 0.1 | 18000 | 100 | 30 | 1.0 | step (a) → step (b) |
| Example 5 | mPDA | 800 | 60 | 0.1 | 48000 | 60 | 30 | 1.0 | step (a) → step (b) |
| Example 6 | mPDA | 5000 | 15 | 1.0 | 75000 (step(a) ×2 =150000) | 160 | 30 | 1.0 | step (a) → step (b) → step (a) |
| Example 7 | phloroglucinol | 500 | 120 | 0.4 | 60000 | 30 | 120 | 0.4 | steps (a) and (b), simultaneous |
| Example 8 | mPDA | 1000 | 60 | 1.0 | 60000 | 80 | 30 | 1.5 | step (a) → step (b) |
| Comparative Example 1 | - | - | - | - | 0 | 50 | 30 | 0.1 | |
| Comparative Example 2 | mPDA | 500 | 60 | 0.1 | 30000 | 80 | 30 | 0.1 | step (a) → step (b) |
| Comparative Example 3 | mPDA | 1500 | 180 | 0.1 | 270000 | 50 | 30 | 0.1 | step (a) → step (b) |
| Comparative Example 4 | mPDA | 10 | 10 | 0.1 | 100 | 50 | 30 | 0.1 | step (b) → step (a) |

(continued)

| | Step (a) | | | | | Step (b) | | | Remarks (sequence of steps) |
|---|---|---|---|---|---|---|---|---|---|
| | Compound | Concentration of the compound (ppm) | Period of contact (min) | Pressure (MPa) | Concentration × time (ppm·min) | Concentration of sodium nitrite (ppm) | Period of contact (min) | Pressure (MPa) | |
| Comparative Example 5 | - | - | - | - | 0 | 50 | 30 | 1.0 | |
| Comparative Example 6 | mPDA | 1500 | 180 | 0.1 | 270000 | 50 | 30 | 1.5 | step (a) → step (b) |

[Table 2]

| | Yellowness | Concentration of extracted substances ($\times 10^{-3}$ wt%) | Ratio between functional-group ratios* | TDS removal ratio (%) | Water production amount ($m^3$/day) | Boron removal ratio (%) |
|---|---|---|---|---|---|---|
| Example 1 | 20 | 0.7 | 1.3 | 99.8 | 35.2 | 94.2 |
| Example 2 | 22 | 0.6 | 1.3 | 99.8 | 31.5 | 95.1 |
| Example 3 | 18 | 0.3 | 1.5 | 99.8 | 36.4 | 93.9 |
| Example 4 | 14 | 0.4 | 1.2 | 99.8 | 44.9 | 91.5 |
| Example 5 | 35 | 0.9 | 1.4 | 99.8 | 27.5 | 95.7 |
| Example 6 | 37 | 0.6 | 1.6 | 99.8 | 25.2 | 96.1 |
| Example 7 | 16 | 0.4 | 1.4 | 99.8 | 40.1 | 92.7 |
| Example 8 | 25 | 0.4 | 1.5 | 99.8 | 33.5 | 95.2 |
| Comparative Example 1 | 6 | 2.1 | 1.0 | 99.7 | 36.4 | 89.3 |
| Comparative Example 2 | 22 | 3.4 | 1.3 | 99.8 | 33.8 | 94.9 |
| Comparative Example 3 | 42 | 4.0 | 1.8 | 99.8 | 16.7 | 94.8 |
| Comparative Example 4 | 15 | 1.6 | 1.0 | 99.8 | 35.2 | 94.7 |
| Comparative Example 5 | 6 | 0.3 | 1.0 | 99.7 | 38.2 | 88.8 |
| Comparative Example 6 | 42 | 0.9 | 2.1 | 99.8 | 18.9 | 94.0 |
| Comparative Example 7 | 5 | 0.3 | 1.1 | 99.8 | 29.7 | 92.9 |
| *: (front-surface side)/(porous-supporting-layer side) | | | | | | |

As can be seen from Table 2, the separation membrane elements obtained in Examples 1 to 8 each are a high-performance separation membrane element in which the polyamide separation function layer has a yellowness in the range of 10 to 40 and the amount of substances extracted from the substrate is small and which is high in water production amount and boron removal ratio.

In Comparative Example 1, the step i) was omitted and the step ii) was conducted not under pressure but at atmospheric pressure. Because of this, the separation membrane element obtained has a yellowness less than 10, has a large extracted-substance amount, and shows low performance. The composite semipermeable membrane is unsuitable for use as a separation membrane element.

In Comparative Examples 2 and 4, the elements have a yellowness in the range of 10 to 40 and have high performance. However, since the step ii) was not conducted under pressure, the amount of extracted substances is large. The composite semipermeable membranes are unsuitable for use as a separation membrane element.

In Comparative Example 3, the element has a yellowness higher than 40 and a high boron removal ratio, but has a low water production amount. Furthermore, since the step ii) was not conducted under pressure, the amount of extracted substances is large. The composite semipermeable membrane is unsuitable for use as a separation membrane element.

In Comparative Example 5, the element has a low boron removal ratio since the step i) was omitted. The composite semipermeable membrane is unsuitable for use as a separation membrane element.

In Comparative Example 6, the element has a yellowness higher than 40 and a high boron removal ratio, but has a low water production amount. The composite semipermeable membrane is unsuitable for use as a separation

membrane element.

In Comparative Example 7, the element has low performance although the amount of extracted substances is small. The composite semipermeable membrane is unsuitable for use as a separation membrane element.

INDUSTRIAL APPLICABILITY

The separation membrane element of the invention is suitable especially for the desalting of brine water or seawater.

## Claims

1. A separation membrane element comprising a composite semipermeable membrane which comprises a microporous support and a polyamide separation function layer disposed thereon, the microporous support comprising a substrate and a porous supporting layer,
wherein the polyamide separation function layer has a yellowness of 10 to 40, and a concentration of substances extracted from the substrate is $1.0 \times 10^{-3}$% by weight or less.

2. The separation membrane element according to claim 1, wherein, in the polyamide separation function layer, when a functional-group ratio for each of a surface of the polyamide separation function layer which is on a side facing the porous supporting layer and a surface of the polyamide separation function layer which is on a side opposite to the porous supporting layer is expressed by [(molar equivalent of azo groups)+(molar equivalent of phenolic hydroxyl groups)+(molar equivalent of amino groups)]/(molar equivalent of amide groups), a value of (the functional-group ratio for the surface on the side opposite to the porous supporting layer)/(the functional-group ratio for the surface on the side facing the porous supporting layer) is 1.1 or larger.

3. The separation membrane element according to claim 1 or 2, wherein the substrate is a long-fiber nonwoven polyester fabric.

4. A method for producing a composite semipermeable membrane, the method including: bringing an aqueous solution of a polyfunctional amine into contact with a solution containing a polyfunctional acid halide on a microporous support comprising a substrate and a porous supporting layer to form a polyamide separation function layer having primary amino groups; and then bringing both a reagent (A) which reacts with the primary amino groups to yield a diazonium salt or a derivative thereof and a reagent (B) which reacts with the diazonium salt or the derivative thereof into contact with the polyamide separation function layer,
wherein the reagent (A) is brought into contact with a surface of the polyamide separation function layer at a pressure of 0.2 MPa or higher, and a product (ppm·min) of a concentration of the reagent (B) and a period of contact between the reagent (B) and the polyamide separation function layer is regulated to 200,000 ppm·min or less.

5. A method for producing a composite semipermeable membrane, the method including: bringing an aqueous solution of a polyfunctional amine into contact with a solution containing a polyfunctional acid halide on a microporous support comprising a substrate and a porous supporting layer to form a polyamide separation function layer having primary amino groups; and then bringing a reagent (C) having a primary amino group, on the polyamide separation function layer, into contact with a reagent (D) which reacts with the primary amino group to yield a diazonium salt or a derivative thereof,
wherein the reagent (D) is brought into contact with a surface of the polyamide separation function layer at a pressure of 0.2 MPa or higher, and a product (ppm·min) of a concentration of the reagent (C) and a period over which the reagent (C) is in contact with the polyamide separation function layer is regulated to 200,000 ppm·min or less.

## INTERNATIONAL SEARCH REPORT

International application No.
PCT/JP2011/067772

A. CLASSIFICATION OF SUBJECT MATTER
*B01D71/56*(2006.01)i, *B01D69/10*(2006.01)i, *B01D69/12*(2006.01)i

According to International Patent Classification (IPC) or to both national classification and IPC

B. FIELDS SEARCHED

Minimum documentation searched (classification system followed by classification symbols)
B01D71/56, B01D69/10, B01D69/12

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2009-255075 A (Toray Industries, Inc.), 05 November 2009 (05.11.2009), paragraphs [0001], [0030] to [0033], [0041], [0044] to [0051], [0054], [0058] (Family: none) | 1-5 |
| A | JP 2009-11913 A (Nitto Denko Corp.), 22 January 2009 (22.01.2009), paragraphs [0047], [0050] (Family: none) | 1-5 |

☐ Further documents are listed in the continuation of Box C.   ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 31 August, 2011 (31.08.11) | 13 September, 2011 (13.09.11) |
| Name and mailing address of the ISA/ Japanese Patent Office | Authorized officer |
| Facsimile No. | Telephone No. |

Form PCT/ISA/210 (second sheet) (July 2009)

**INTERNATIONAL SEARCH REPORT**

International application No.
PCT/JP2011/067772

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:

The technical feature common to the invention of claim 1 and the invention of claims 4 and 5 is "a composite semipermeable membrane which has a polyamide separation function layer on a microporous supporting body that is composed of a base and a porous supporting layer". The common technical feature, however, cannot be considered as a special technical feature since it does not make a contribution over the prior art in view of the disclosure of document JP 2009-255075 A. In addition, there is no other same or corresponding special technical feature.

1. ☐ As all required additional search fees were timely paid by the applicant, this international search report covers all searchable claims.
2. ☒ As all searchable claims could be searched without effort justifying additional fees, this Authority did not invite payment of additional fees.
3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

INTERNATIONAL SEARCH REPORT

International application No.
PCT/JP2011/067772

Claims 1-3 are not fully supported by the description.

Claim 1 sets forth "a separation membrane element wherein the degree of yellowing of the polyamide separation function layer is 10-40 (inclusive) and the concentration of a material dissolved from the base is $1.0 \times 10^{-3}$% by weight or less", while claim 2 sets forth "a separation membrane element wherein (functional group ratio of surface on reverse side of porous supporting layer-side surface)/(functional group ratio of porous supporting layer-side surface) is 1.1 or more when respective functional group ratios of the porous supporting layer-side surface and the surface on the reverse side of the porous supporting layer-side surface are represented by (molar equivalent of azo groups + molar equivalent of phenolic hydroxyl groups + molar equivalent of amino groups)/(molar equivalent of amide groups)".

Meanwhile, the description only sets forth as examples that separation membrane elements that have specific properties (the degree of yellowing of the polyamide separation function layer is 14, 16, 18, 20, 22, 25, 35 or 37; the concentration of a material dissolved from the base is $0.3 \times 10^{-3}$, $0.4 \times 10^{-3}$, $0.6 \times 10^{-3}$, $0.7 \times 10^{-3}$ or $0.9 \times 10^{-3}$; and the functional group ratio is 1.2, 1.3, 1.4, 1.5 or 1.6) are obtained by producing the separation membrane elements from specific precursors, by specific methods and under specific production conditions (precursor solution concentration, contact time, contact pressure, number of contacts and the like). It is not set forth that the above-mentioned specific separation membrane elements are obtained even by producing the separation membrane elements from other precursors, by other production methods or under other conditions. In addition, it is a common technical knowledge that the properties of a membrane are varied by the precursor, the production method and production conditions of the membrane. Consequently, there is not even a clue to extend or generalize that a separation membrane element wherein "the degree of yellowing of the polyamide separation function layer is 10-40 (inclusive)", "the concentration of a material dissolved from the base is $1.0 \times 10^{-3}$% by weight or less" and "(functional group ratio of surface on reverse side of porous supporting layer-side surface)/(functional group ratio of porous supporting layer-side surface) is 1.1 or more" can be obtained from precursors other than the above-mentioned ones, by production methods other than the above-mentioned ones or under conditions other than the above-mentioned ones.

This international search report therefore covers those supported and disclosed by the description, namely separation membrane elements which are produced from specific precursors, by specific production methods and under specific production conditions specifically disclosed in the description.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 11019493 A
- JP 2001259388 A
- JP 2007090192 A
- JP 2006122886 A
- JP 2078428 A


### Non-patent literature cited in the description


- *Journal of Polymer Science,* 1988, vol. 26, 559-572
- *Nihon Setchaku Gakkai-shi,* 1991, vol. 27 (4
- *Office of Saline Water Research and Development Progress Report, No.359,* 1968